# EUROPÄISCHE PATENTSCHRIFT

(11) **EP 0 768 742 B1**
(45) Veröffentlichungstag und Bekanntmachung des Hinweises auf die Patenterteilung: **08.03.2000**
(21) Anmeldenummer: 96116097.5
(22) Anmeldetag: 08.10.1996
(51) Int. Cl.: H02G 3/04, E04F 17/08, E04F 19/04, F16L 3/00

(54) **Installationskanal**
Installation conduit
Canal d'installation

(30) Priorität: 10.10.1995 DE 29521154 U
(43) Veröffentlichungstag der Anmeldung: 16.04.1997
(73) Patentinhaber: gabo Systemtechnik GmbH, 94559 Niederwinkling (DE)
(72) Erfinder: Fellinger, Herbert, Dipl.-Ing. FH, 94522 Wallersdorf (DE); Baumann, Friedhelm, Dipl.-Ing. FH, 94362 Neukirchen (DE)

(56) Entgegenhaltungen:
- EP-A- 0 188 168
- EP-A- 0 637 864
- DE-U- 29 500 112
- DE-U- 29 505 098
- GB-A- 1 562 566
- US-A- 3 911 637
- US-A- 4 032 821

## Beschreibung

Die Erfindung bezieht sich auf einen Installationskanal für Sanitär - und Elektroinstallation, mit zwei voneinander getrennten Kammern für Sanitär- und Elektroleitungen, Glasfaserkabel etc. sowie Anschlüssen für Steckdosen, Abzweiger usw. und einer frontseitigen Abdeckung.

Derartige Installationskanäle, die meist auch als Sockelleisten in Wohnräumen montiert werden, sind an sich bekannt. Sie dienen vor allem dazu, in Altbauten und bei notwendigen Sanierungsarbeiten auf einfache Weise ein komplettes Installationskanalsystem für Sanitär- und/oder Elektroinstallationen zu erstellen, wobei die Installationen durch meist aus Kunststoff betehende Profile verkleidet sind. Unter Sanitärinstallation sind Fluidleitungen für Kalt- bzw. Warmwasser und für die Heizkörperanbindung, sogen. Heizleitungen zu verstehen; unter Elektroinstallationen, Stark- und Schwachstromkabel, Glasfaserkabel, Steuerleitungen etc..

So ist u.a. aus dem DE GM 295 00 112.7 ein Steckdosenteil für ein Sockelleistenprofilsystem mit einem gemeinsamen Hohlraum für Heizleitungs- und Elektroinstallationen bekannt geworden, wobei das Steckdosenteil in dem Bereich, der den Hohlraum begrenzt, mit wenigstens einer Luftkammer ausgebildet ist, wobei auch nur eine Frontabdeckung für den Hohlraum vorgesehen ist.

Das DE GM 295 05 098, das eine Sockelleiste mit Rohrhalterung betrifft, offenbart einen Installationskanal für Heizleitungsrohre und Elektrokabel mit einer beiden gemeinsamen Frontabdeckung sowie einer zusätzlichen Abdeckung für die Elektrokabel.

Aus der DE OS 23 04 038 geht eine einfach ausgebildete Kabelrinne hervor, deren Behälter Hohlkammerstruktur aufweist, während der Deckel lediglich eine flache Abdeckung ist, die mit dem Behälter verrastet ist, wobei in den Hohlkammern des Behälters zusätzlich Armierungen vorgesehen sein können.

Eine Kunststoffleiste, insbesondere Fußleiste, zum Verlegen von elektrischen Leitungen in Häusern zeigt die DE OS 27 23 814, bei der ein Scharnier vorgesehen ist, das es ermöglicht, die frontseitige Abdeckung zu öffnen.

Ein weiterer Installationskanal mit winkelförmigen Hohlkammerprofilen für die Rückwand und die frontseitige Abdeckung geht aus der DE OS 39 08 310 hervor, bei dem die Rückwand und die Abdeckung spiegelbildlich aufeinandergerastet sind.

Diese Installationskanäle sind sämtliche mit verschiedenen Nachteilen behaftet. Ein besonders gravierender Nachteil ist darin zu sehen, daß beide Kammern, soweit überhaupt vorhanden, also die für die Sanitär- bzw. Heizleitungsinstallation einerseits und die für die Elektroinstallation nur über eine beiden Räumen gemeinsame Frontabdeckung zugänglich sind. Eine getrennte Zugangsmöglichkeit für jede der beiden Kammern einzeln ist nicht gegeben. Einen weiteren Nachteil stellen die notwendigen Maßnahmnen zur Wärmedämmung zwischen den Kammern für die Sanitärinstallation und die Elektroinstallation dar, die in dieser Hinsicht nur unzureichend ausgebildet sind. Eine solche thermische Entkopplung der beiden Kammern ist jedoch notwendig.

Hier setzt die Erfindung ein.

Der Erfindung, wie sie in den Ansprüchen beschrieben ist, liegt die Aufgabe zugrunde, einen als Sockelleiste ausgebildeten Installationskanal für Sanitär- und Elektroinstallationen zu besitzen, der die Nachteile der bekannten Installationskanäle nicht aufweist und bei dem die Kammern für die Sanitärinstallation von denen der Elektroinstallation voneinander völlig getrennt und beide Kammern thermisch entkoppelt sind.

Die mit der Erfindung erzielten Vorteile liegen insbesondere in der Anordnung von zwei getrennten, mit den jeweiligen Kammern verrastbaren Abdeckungen, von denen wenigstens diejenige für die die Sanitärinstallationen aufnehmende Kammer, wie die Kammern selbst, durch Hohlkammerprofile integriert wärmegedämmt ist und in der separaten Anordnung von Schwachstromleitungen, Glasfaserkabeln, Steuerleitungen usw. in einer besonderen Kammer, d.h. eine die Elektroinstallationen aufnehmenden Kammer. Somit ist die Kammer für die Elektroinstallationen jederzeit zugänglich, ohne daß die Kammer für die Sanitärinstallationen vorher geöffnet, demontiert und anschließend wieder montiert werden muß. Ein weiterer Vorteil ist die Möglichkeit, beide Kammern des Installationskanals als getrennte Bauteile vorzusehen, also nachzurüsten und der einfachen Anordnung von Steckdosen etc. im Laufe des Installationskanals durch das Einbauen von wärmegedämmten Ausgleichsstücken. Schließlich ist es vorteilhaft, daß z. B. eine Elektrosteckdose thermisch gedämmt installiert werden kann.

Die Erfindung ist nachstehend anhand eines in den Abbildungen dargestellten Ausführungsbeispieles näher erläutert.

Es zeigt:
Fig. 1 einen erfindungsgemäßen Installationskanal,
Fig. 2 eine Ausführungsvariante der Fig. 1 und
Fig. 3 einen Steckdosenbereich des Installationskanals.

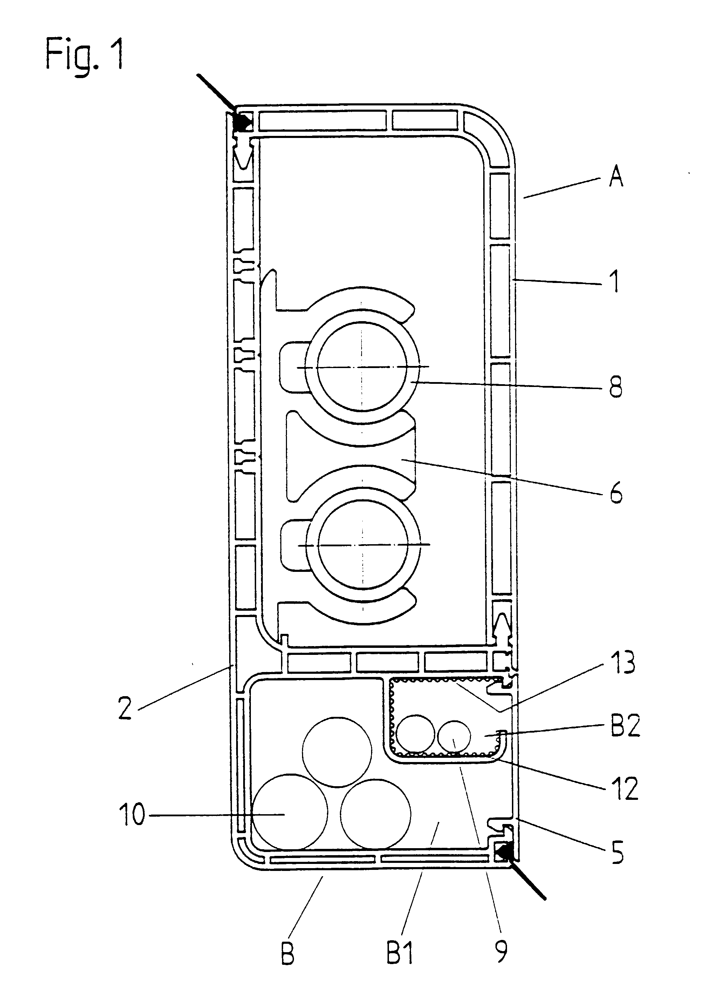

Die Figur 1 zeigt einen aus zwei Kammern A und B bestehenden, als Sockelleiste in Wohnräumen montierbaren Installationskanal für Sanitärinstallationen 8 und Elektroinstallationen 10.

Es hat sich gezeigt, daß bei Sanierungsarbeiten in Altbauten oftmals, außer Heizleitungen etc. auch Starkstromkabel und Schwachstromkabel, Antennenkabel, Glasfaserkabel etc. verlegt werden müßen, die vorzugsweise zusammengefasst verlegt werden. Die Kammer B ist deshalb in eine Kammer B₁ für Starkstromkabel 10 und eine Kammer B₂ für Schwachstromkabel, Glasfaserkabel oder dergl. 9 unterteilt, wobei die beiden Teilkammern B₁ und B₂ vorteilhafterweise gegenseitig elektromagnetisch abgeschirmt sind, beispielsweise durch eine Metallisierung 13 oder dergl. des Aufnahmeprofils 12 der Teilkammer B₂.

Die obere Kammer A des Installationskanals besteht aus einem Hohlkammerprofil 1 als Frontabdeckung und einem weiteren Hohlkammerprofil 2 als Rückwand mit integriertem Hohlkammerprofil für die Kammer B, die mittels einer separaten Frontabdeckung 5 verschlossen ist. Diese Frontabdeckung kann entweder als Hohlkammerprofil, wie die Frontabdeckung 1 ausgebildet sein oder als einfache Abdeckplatte mit Rasten. Beide Frontabdeckungen 1 und 5 rasten in das Rückwandprofil ein und ergeben eine glatte Frontfläche. In der oberen Kammer A verlaufen, in Rohr- bzw. Profilhalterungen 6 verlegt, eine oder mehrere Sanitärleitungen 8, beispielsweise Brauchwasser- und Heizleitungen.

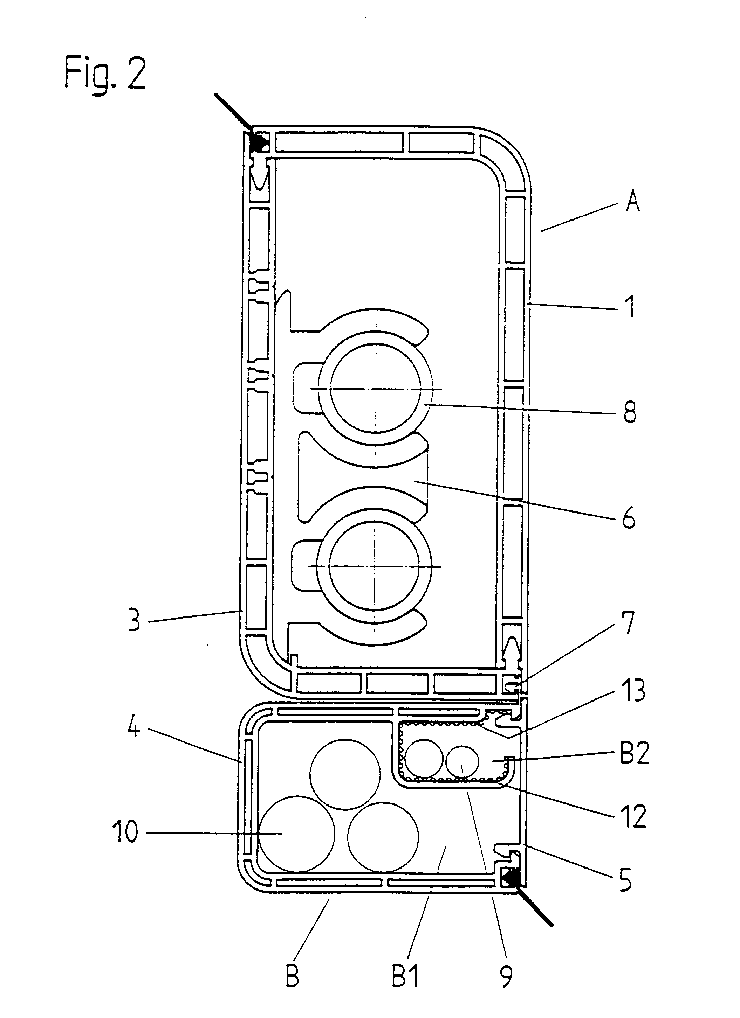

Die Figur 2 zeigt eine Ausführungsvariante des in Figur 1 dargestellten Installationskanals, bei der die Kammern A und B als separate Bauteile 3 bzw. 4 ausgebildet und untereinander montiert sind und z. B. über die Raste 7 miteinander verbunden werden können. Die Kammer B ist als etwa U-förmiges offenes Gehäuse 4, das mittels der Frontabdeckung 5 verschlossen werden kann, vorgesehen, während die Kammer A als winkelförmiges Profil ausgebildet ist, das von der ebenfalls winkelförmigen Frontabdeckung 1 verschlossen werden kann.

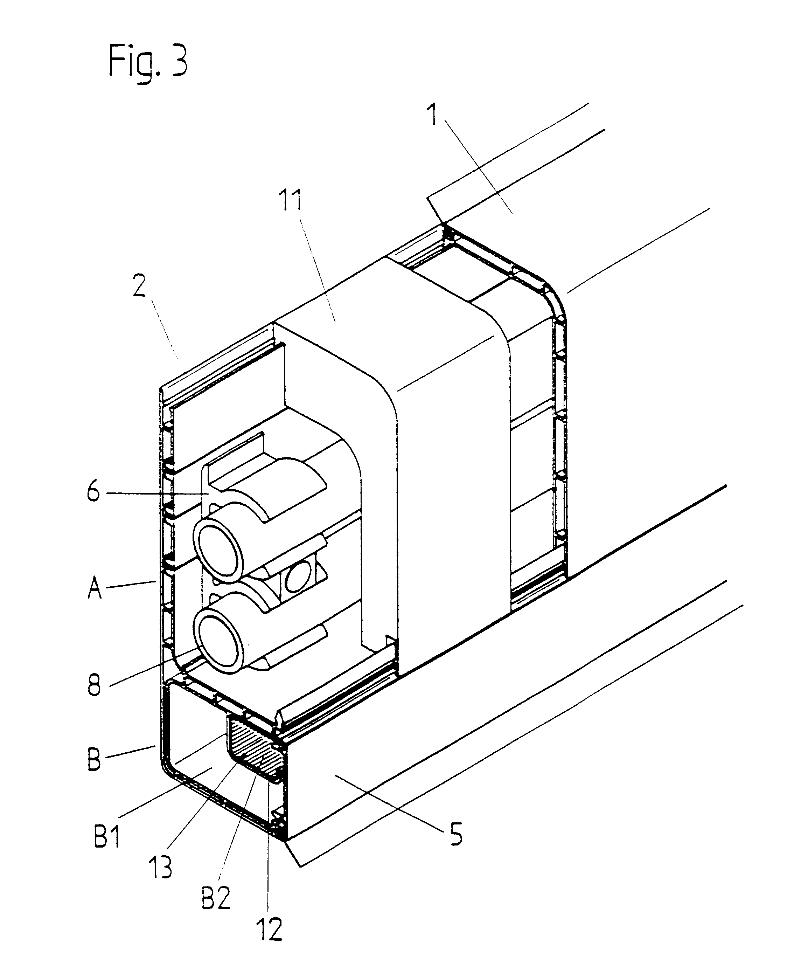

Die Figur 3 zeigt den Installationskanal bei dem die Frontabdeckung 1 für den Einbau einer Elektrosteckdose oder dergl. vorbereitet ist, indem ein gedämmtes Ausgleichsstück 11 zwischen zwei Abschnitte der Frontabdeckung 1 eingefügt ist. An dieser Stelle kann jederzeit ein, ebenfalls gedämmtes, Element, wie z.B. eine Elektrosteckdose montiert werden, die somit nicht von den in der oberen Kammer A verlaufenden Heizleitungen thermisch beeinflusst wird.

### STÜCKLISTE

- A: Kammer für Sanitärleitungen
- B: Kammer für Elektroleitungen
- B₁: Teilkammer für Starkstromleitungen
- B₂: Teilkammer für Schwachstromleitungen
- 1: Frontabdeckung für Kammer A
- 2: Rückwand
- 3: winkelförmiges Gehäuse
- 4: U-förmiges Gehäuse
- 5: Frontabdeckung für Kammer B
- 6: Rohrhalterung
- 7: Raste
- 8: Sanitärrohre
- 9: Schwachstromleitungen
- 10: Starkstromleitungen
- 11: Ausgleichsstück
- 12: Aufnahmeprofil der Teilkammer B₂
- 13: Abschirmung

## Patentansprüche

1. Installationskanal für Sanitär- und Elektroinstallation, mit zwei Kammern für Sanitär- und Elektroleitungen, sowie Anschlüssen für Steckdosen, Abzweiger usw. und einer frontseitigen Abdeckung, **dadurch gekennzeichnet**, daß eine Kammer (A) für die Sanitärinstallation (8) und eine Kammer (B) für die Elektroinstallation (9,10) vorgesehen sind die beide je eine voneinander unabhängige Frontabdeckung (1,5) besitzen und die beiden Kammern (A,B) durch eine integrierte Wärmedämmung thermisch voneinander entkoppelt sind, wobei die Kammer (B) durch ein Aufnahmeprofil (12) für die Schwachstromkabel in eine Kammer (B₁) für Starkstromleitungen (10) und eine Kammer (B₂) für Schwachstromleitungen unterteilt ist.

2. Installationskanal nach Anspruch 1, **dadurch gekennzeichnet**, daß die Kammer (B₁) für die Starkstromleitungen (10) und die Kammer (B₂) für die Schwachstromleitungen (9) durch eine elektromagnetische Abschirmung (13) gegeneinander abgeschirmt sind.

3. Installationskanal nach Anspruch 1 und 2, **dadurch gekennzeichnet**, daß in unterschiedlichen Abständen wärmegedämmte Ausgleichsstücke (11) für die Montage von Sanitär- und Elektrosteckdosen vorgesehen sind.

4. Installationskanal nach Anspruch 1 bis 3, **dadurch gekennzeichnet**, daß die Kammer (B) als getrenntes Bauteil vorgesehen ist.

5. Installationskanal nach Anspruch 1 bis 4, **dadurch gekennzeichnet**, daß mindestens eine Frontabdeckung (1,5) als Hohlkammerprofil ausgebildet ist.

## Claims

1. Ducting for sanitary and electrical installations, having two chambers for sanitary and electrical lines, as well as connections for electrical sockets, feeder tap units etc., and a front cover, characterised in that one chamber (A) is provided for the sanitary installation (8) and one chamber (B) for the electrical installation (9, 10), both of which have a separate front cover (1, 5) and the two chambers (A, B) are thermally isolated from each other by integral thermal insulation, where chamber (B) is subdivided by a mounting profile (12) for the weak-current cables into a chamber (B₁) for power cables (10) and a chamber (B₂) for weak-current lines.

2. Ducting according to claim 1, characterised in that the chamber (B₁) for the power cables (10) and the chamber (B₂) for the weak-current lines (9) are shielded from each other by an electromagnetic screen (13).

3. Ducting according to claims 1 and 2, characterised in that thermally insulated compensating elements (11) are provided at various intervals for mounting sanitary and electrical sockets.

4. Ducting according to claims 1 to 3, characterised in that the chamber (B) is provided as a separate unit.

5. Ducting according to claims 1 to 4, characterised in that at least one front cover (1,5) is designed as a hollow chamber section.

## Revendications

1. Canal pour installations électriques et sanitaires, comportant deux compartiments séparés pour conduites sanitaires et câbles électriques, ainsi que des raccords pour prises, dérivations, etc. et un recouvrement frontal, **caractérisé par le fait que** l'un des compartiments (A) est destiné à l'installation sanitaire (8) et l'autre (B) à l'installation électrique (9, 10), chacun de ces compartiments étant doté d'un recouvrement frontal (1, 5) propre, et que ces deux compartiments (A,B) sont isolés l'un de l'autre par une isolation thermique intégrée, le compartiment (B) étant lui-même divisé par un profilé (12) pour câbles à courant faible en un sous-conduit (B₁) pour câbles à courant fort (10) et un sous-conduit (B₂) pour câbles à courant faible.

2. Canal d'installation d'après la revendication 1, **caractérisé par le fait que** le sous-conduit (B₁) pour câbles à courant fort (10) et le sous-conduit (B₂) pour câbles à courant faible (9) sont séparés l'un de l'autre par un blindage électromagnétique (13).

3. Canal d'installation d'après les revendications 1 et 2, **caractérisé par le fait que** des éléments entretoises (11) à isolation thermique sont prévus à intervalles variables, pour le montage d'adaptateurs sanitaires et de prises électriques.

4. Canal d'installation d'après les revendications 1 à 3, **caractérisé par le fait que** le compartiment (B) est conçu comme composant séparé.

5. Canal d'installation d'après les revendications 1 à 4, **caractérisé par le fait que** l'un des recouvrements frontaux (1, 5) au moins est conçu comme profilé compartimenté creux.
